# EUROPEAN PATENT SPECIFICATION

(11) **EP 4 318 210 B1**
(45) Date of publication and mention of the grant of the patent: **08.10.2025**
(21) Application number: 21943444.6
(22) Date of filing: 31.05.2021
(51) Int. Cl.: G06F 8/36, G06F 9/54, G06F 9/46

(54) **APPLICATION PROGRAM CONSTRUCTION METHOD, EXECUTION METHOD, COMPUTING DEVICE, AND STORAGE MEDIUM**
ANWENDUNGSPROGRAMMKONSTRUKTIONSVERFAHREN, AUSFÜHRUNGSVERFAHREN, RECHNERVORRICHTUNG UND SPEICHERMEDIUM
PROCÉDÉ DE CONSTRUCTION DE PROGRAMME D'APPLICATION, PROCÉDÉ D'EXÉCUTION, DISPOSITIF INFORMATIQUE ET SUPPORT DE STOCKAGE

(43) Date of publication of application: 07.02.2024
(73) Proprietor: Siemens Aktiengesellschaft, 80333 München (DE)
(72) Inventor: LI, Dong, Beijing 100025 (CN); YANG, Xiaobo, Beijing 100164 (CN); ZHANG, Jianyong, Beijing 102600 (CN); WANG, Tongzhou, Beijing 100176 (CN); ZHANG, Chuanyu, Beijing 100028 (CN); KANG, Yaolei, Beijing 100032 (CN)
(74) Representative: Isarpatent
(86) International application number: PCT/CN2021/097457
(87) International publication number: WO 2022/252068

(56) References cited:
- CN-A- 104 834 555
- CN-A- 109 460 250
- CN-A- 111 722 841
- CN-A- 112 558 949
- US-A1- 2016 124 782
- US-A1- 2018 278 471
- US-A1- 2020 151 038
- US-A1- 2020 293 383
- US-A1- 2020 293 383

## Description

### Technical Field

The present disclosure generally relates to the technical field of industrial Internet of Things, and more specifically to an application program construction method, an execution method, a computing device, and a storage medium.

### Background Art

As software becomes larger and larger and the time to market becomes shorter, modular programming has become an important way of software design and implementation technology. Its purpose is to divide the functions of a program into independent and replaceable modules. In this way, developers can develop application programs in parallel and improve the reusability of each module, thereby reducing the time to market of the application program.

A Robot Operating System (ROS) is a flexible framework for writing robot software. The ROS is a collection of tools, libraries, and events designed to simplify the task of producing complex and robust robot behavior across various robot platforms. However, if it is not used for robot applications, there are limitations of the operating system and programming language.

Node-RED is a programming tool in the prior art that connects hardware devices, APIs and online services. An application program can be simply synthesized by using existing nodes in the Node-RED. However, developing a new node requires a larger workload. (Only JavaScript language can be used to develop limited application functions. Developing core functions requires a larger workload, such as understanding module API, storage API, HTTP API and context API, etc.)

US 2020/151038 A1 relates to an automated framework for building and configuring service configuration files related to web services and APIs.

### Summary of the Invention

A brief summary of the present invention will be presented below, so as to provide a basic understanding of certain aspects of the present invention. It should be understood that this summary is not an exhaustive overview of the present invention. It is not intended to determine key or critical elements of the present invention or to define the scope of the present invention. The purpose of the summary is merely to present some concepts in a simplified form as a prelude to the more detailed description that will be discussed later.

In view of this, the present invention proposes a lightweight distributed application program construction method, which can integrate functional modules into an application program and realize communication between functional modules.

According to one aspect of the present disclosure, there is provided an application program construction method, comprising: determining a plurality of functional modules that constitute an application program; attaching a pre-configured communication component to each functional module; and establishing a connection relationship between the functional modules by using the communication components, and storing the connection relationship in a configuration file.

Optionally, in an example of the above aspect, the functional modules are threads or processes that implement independent functions.

Optionally, in an example of the above aspect, the communication component comprises at least one of an input communication interface and an output communication interface.

Optionally, in an example of the above aspect, the communication component further comprises: at least one of a monitoring module, a caching module, and a load balancing module.

Optionally, in an example of the above aspect, the method further comprises: modifying execution logic of the application program by modifying the configuration file.

According to another aspect of the present disclosure, there is provided an execution method of an application program, the application program being constructed using the application program construction method as described above, the execution method for the application program comprising: initializing the application program, and loading an application program configuration file; when a first functional module of the application program receives data, triggering execution of the first functional module; and sending, by the first functional module, data to a pre-configured port in an output communication interface of the first functional module according to an execution result of the first functional module, so as to trigger execution of a second functional module bound to the port, sending, by the second functional module, data to a pre-configured port in an output communication interface of the second functional module according to an execution result of the second functional module, so as to trigger execution of a third functional module bound to the port, and so on, until execution of the application program ends.

According to another aspect of the present disclosure, there is provided a computing device, comprising: at least one processor; and a memory coupled to the at least one processor, the memory being used for storing instructions that, when executed by the at least one processor, cause the processor to perform the method as described above.

According to another aspect of the present disclosure, there is provided a non-transitory machine-readable storage medium storing executable instructions that, when executed, cause the machine to perform the method as described above.

According to another aspect of the present disclosure, there is provided a computer program, comprising computer-executable instructions that, when executed, cause at least one processor to perform the method as described above.

According to another aspect of the present disclosure, there is provided a computer program product, the computer program product being tangibly stored on a computer-readable medium and comprising computer-executable instructions that, when executed, cause at least one processor to perform the method as described above.

The application program construction method and execution method according to the present invention have at least one of the following advantages.

Developers can use any programming language to develop functional modules in parallel, reducing the dependencies between functional modules. The developers only need to focus on the functions to be implemented by the functional modules without caring about the details of communication.

The functional modules can be deployed on one machine or a plurality of different machines without changing any code.

The developers can modify the execution logic of the application program by modifying the configuration file, and can dynamically adjust, by modifying the configuration file, the communication methods between the functional modules, such as shared memory, IPC or socket, etc.

Function modules of new device can be easily added without affecting the execution of the application program.

With the caching module, even if a functional module has a fault, the execution of other functional modules of the application program will not be interrupted, and no data will be lost.

### Brief Description of the Drawings

The above and other objects, features and advantages of the present invention will be more easily understood with reference to the following description of the embodiments of the present invention in conjunction with the drawings. The components in the drawings are merely illustrative of the principles of the present invention. In the drawings, the same or similar technical features or components will be denoted by the same or similar reference signs. In the drawings:
FIG. 1 is a flowchart of an exemplary process of an application program construction method according to an embodiment of the present invention;
FIG. 2 is a schematic diagram of a specific example of a gateway application program constructed using the method of the embodiment of the present invention;
FIG. 3 is a flowchart of an exemplary process of an execution method of an application program constructed according to the method of the present invention;
FIG. 4 shows a block diagram of a computing device for executing an application program according to an embodiment of the present disclosure.

In the figures, the reference signs are as follows:

| | | | |
|---|---|---|---|
| 100: | Application program construction method | S102, S104, S106 and S108: | Step |
| 200: | Gateway application | M1, M2, M3, M4, M5, M6 and | |
| | program | M7: | Function module |
| OCI: | Output communication interface | ICI: | Input communication interface |
| 300: | Application program execution method | S302 , S304 and S306: | Step |
| 400: | Computing device | 402: | Processor |
| 404: | Memory | | |

### Detailed Description of the Preferred Embodiments

The subject matter described herein is now discussed with reference to exemplary embodiments. It should be understood that these embodiments are discussed purely in order to enable those skilled in the art to better understand and thus implement the subject matter described herein, without limiting the protection scope, applicability or examples expounded in the claims. The functions and arrangement of the elements discussed can be changed without departing from the scope of protection of the content of the present disclosure. Various processes or components can be omitted from, replaced in or added to each example as required. For example, the method described may be performed in a different order from that described, and all of the steps may be added, omitted or combined. In addition, features described in relation to some examples may also be combined in other examples.

As used herein, the term "comprises" and variants thereof denote open terms, meaning "including but not limited to". The term "based on" means "at least partly based on". The terms "one embodiment" and "an embodiment" mean "at least one embodiment". The term "another embodiment" mean "at least one other embodiment". The terms "first", "second" , etc. may denote different or identical objects. Other definitions may be included below, either explicit or implicit. Unless clearly indicated in the context, the definition of a term is the same throughout the specification.

According to an embodiment of the present invention, there is proposed a lightweight distributed application program construction method, which can integrate functional modules into an application program and realize communication between functional modules.

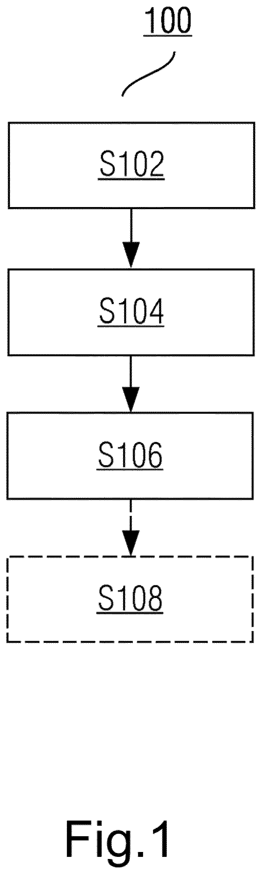

The application program construction method and execution method according to the embodiment of the present disclosure will be described in detail below with reference to the drawings. FIG. 1 is a flowchart of an exemplary process of an application program construction method 100 according to an embodiment of the present invention.

First, in step S102, a plurality of functional modules constituting an application program are determined.

According to the method of the present invention, the application program is first divided into a plurality of independent functional modules according to the functions of the application program. In this way, different functional modules may be developed in parallel by a plurality of developers, and each developed module has better reusability.

Each module implements an independent function, and may be a process running alone or a thread running together with other modules.

Next, in step S104, a pre-configured communication component is attached to each functional module.

In the method according to the present disclosure, one functional module and other functional modules establish connections therebetween and exchange data through communication components. The communication component is a pre-configured communication library, which may include a plurality of functions to implement different functions. Moreover, the communication library may support function modules using different programming languages. Therefore, there is no restriction on the programming language used by developers to develop function modules.

The communication component may be pre-configured by a person skilled in the art, and a plurality of versions may be provided for functional modules in different programming languages. The specific implementation of the communication component is not limited in the present invention, and will not be described in detail here.

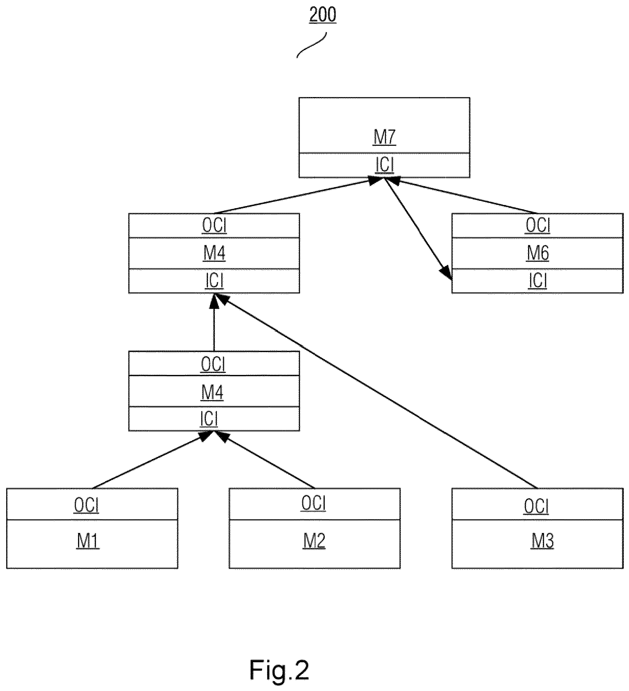

In order to implement scheduling between functional modules, the communication component attached to the functional modules at least includes at least one of an input communication interface and an output communication interface. According to the functions to be implemented by the modules, only the input communication interface or the output communication interface may be attached, or both may be attached. For example, in an example of a gateway application program shown in FIG. 2 below, as a data source of the application program, a functional module that obtains data from an external device may only be attached with an output communication interface, and establishes a connection with other functions of the application program through the output communication interface. As a functional module of a data pool, it may only be attached with an input communication interface, and receive data from other functional modules through the input communication interface for storage.

In step S106, the communication component of the functional module is used to establish a connection relationship between the functional modules, and the connection relationship is stored in a configuration file.

Through the steps described above, a plurality of functional modules can be constructed into an application program. The functional modules establish connections and exchange data through communication components.

In an example, the communication component may also include at least one of a monitoring module, a caching module, a load balancing module, etc. The monitoring module is used to monitor whether the connection between two functional modules is normal. The caching module can cache data to be sent or received data. Using the cache, hot switching of functional modules can be realized. When a functional module is replaced, no messages will be lost, and other functional modules can still run. The load balancing module is used to balance the load between functional modules. When the business volume is large, a plurality of identical functional modules can be used to handle timeconsuming work. The monitoring module, caching module, and load balancing module may each be set in the input communication interface and the output communication interface.

In an example, the application program construction method 100 further includes step S108: modifying execution logic of the application program by modifying the configuration file.

For example, when adding a function module, modifying a port of the function module for receiving data, modifying a calling relationship of the function module, etc., they all can be achieved by modifying the configuration file.

FIG. 2 is a schematic diagram of a specific example of a gateway application 200 constructed using the method of the present invention. The specific process of constructing an application program will be further described below with reference to the specific example in FIG. 2.

It is assumed that the gateway application program 200 includes seven functional modules: M1, M2, M3, M4, M5, M6 and M7. Among them, M1, M2, M3 and M6 are data sources of the application program that obtain data from an external device; M7 is a data pool, which receives and stores data; M4 and M5 are data filters that process data according to certain logic. Each functional module is attached with a communication component, where the reference sign OCI denotes the output communication interface, and ICI denotes the input communication interface. It can be understood that for different functional modules, specific contents included in OCI and ICI may be different, but similar functions are implemented, so they are not distinguished in the reference signs herein. According to the different functions implemented by the functional modules, M1, M2, and M3 are only attached with the output communication interface OCI, M7 is only attached with the input communication interface ICI, and M4, M5, and M6 are attached with both the output communication interface OCI and the input communication interface ICI.

In the configuration file shown below, it is separately configured for each functional module. In the configuration information of M1, c indicates that M1 serves as a client, and its output interface parameter is 'tcp://localhost:5557'. This parameter indicates that M1 is to be connected to a service provided by port "5557". According to the configuration file, it can be seen that M1 is connected to M4. In the configuration information of M4, b indicates binding 'tcp://*:5557', that is, M4 provides a service through port 5557, and M4 is connected to a service provided by port 5558, that is, M4 is connected to M5. The configuration information of other functional modules will not be described in detail here. Through this configuration file, the connection relationship between functional modules as shown in FIG. 2 can be obtained.

Configuration file for the gateway application program:
config globals 'M1'
   option **'c'** 'tcp://localhost:5557'
config globals **'M2'**
   option **'c'** 'tcp://localhost:5557'
config globals **'M3'**
   option **'c'** 'tcp://localhost:5558'
config globals **'M4'**
   option **'b'** 'tcp://*:5557'
   option **'c'** 'tcp://localhost:5558'
config globals 'M5'
   option 'b' 'tcp://*:5558'
   option 'c' 'tcp://localhost:5559'
config globals 'M6'
   option 'b' 'tcp://*:5560'
   option 'c' 'tcp://localhost:5559'
config globals 'M7'
   option 'b' 'tcp://*:5559'
   option 'c' 'tcp://localhost:5560'

If a new device is to be connected to the gateway, in a new function module, the developers only need to implement codes related to the hardware of the new device, then attach a communication component to it, and configure the function modules of the new device in the configuration file of the application program. When adding the new function module, function modules M4-M7 can be reused without any changes or even restarting the application program. If a data filter module, such as M5, needs to be replaced, M4 and M7 will not stop working when M5 stops working. The data of M4 will be temporarily stored in the caching module of the communication component. When the newly replaced functional module M5 starts working, the connection between M4 and M5 will be automatically established according to the connection relationship in the configuration file. At this time, the cached data will be resent to the new M5. When M5 stops working, M7 continues to receive data from other functional modules without being affected.

The application program constructed according to the application program construction method of the embodiment of the present invention is an event-triggered data flow, that is, when a functional module receives data, the execution of the application program can be triggered.

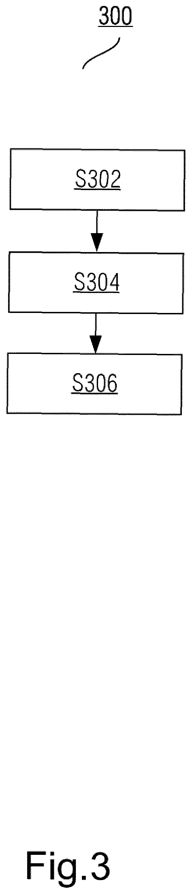

The execution process of the application program constructed according to the method of the present invention will be described below with reference to FIG. 3.

FIG. 3 is a flowchart of an exemplary process of an execution method 300 of an application program constructed according to the method of the present invention.

First of all, in step S302, the application program is initialized and the configuration file of the application program is loaded.

Specifically, in the initialization phase of the application program constructed according to the method of the present invention, in addition to executing an initialization function of the application program, the configuration file of the application program needs to be loaded. The configuration file described here is a configuration file configuring the connection relationship between various functional modules as described above.

In addition, a module configuration file may also be loaded during the initialization phase. The module configuration file is a file that configures internal parameters of a module. The same functional module may have a plurality of instances, and each instance may have the same or different module configuration files.

Next, in step S304, when a first functional module of the application program receives data, the execution of the first functional module is triggered.

The first functional module here does not refer to a specific functional module. When a certain functional module of the application receives data, it triggers the execution of the functional module, which in turn triggers the execution of the application program. Then, the functional module is called a first functional module. The first functional module, the second functional module and the third functional module in the following are only to distinguish different functional modules and do not refer to specific functional modules. There is no specific order for the execution of various functional modules.

In addition to supporting a client/server (C/S) mechanism, the application program constructed according to the method of the present invention also supports a subscription/publishing (Pub/Sub) mechanism. In this case, when an event about a specific topic is received, the execution of the function module is triggered.

Finally, in step S306, the first functional module sends data to a pre-configured port in an output communication interface of the first functional module according to an execution result of the first functional module, so as to trigger execution of a second functional module bound to the port, the second functional module sends data to a pre-configured port in an output communication interface of the second functional module according to an execution result of the second functional module, so as to trigger execution of a third functional module bound to the port, and so on, until execution of the application program ends.

A specific example of the execution process of the gateway application program will be described below with reference to FIG. 2 again.

First of all, assuming that the function module M1 receives alarm data from an external sensor, the execution of M1 is triggered. The execution result of M1 is sent to port '5557' through its output communication interface, that is, it is sent to the input communication interface of the function module M4, and then the execution of M4 is triggered. The execution result of M4 is sent to port '5558' through its output communication interface, that is, it is sent to the input communication interface of the function module M5, and then the execution of M5 is triggered. Next, the execution result of M5 is sent to port '5559' through its output communication interface, that is, it is sent to the input communication interface of the function module M7. M7 stores the received data without sending it to other functional modules, and the gateway application program ends. After a period of time, it is possible that the function module M2 receives the data, and then a new execution process of the application program is triggered.

It can be seen that the application program constructed according to the application program construction method of the present invention is triggered based on data or an event. There is no order in which the functional modules are started, and they may also be executed in parallel.

The application program construction method and execution method according to the present invention have at least one of the following advantages.

By reducing the dependencies between modules, the developers can develop in parallel, can use any programming language to develop functional modules, and only needs to focus on the functions to be implemented by the functional modules without caring about the details of communication.

The functional modules can be deployed on one machine or a plurality of different machines without changing any code.

The developers can modify the execution logic of the application program by modifying the configuration file, and can dynamically adjust, by modifying the configuration file, the communication methods between the functional modules, such as shared memory, IPC or socket, etc.

Function modules of new device can be easily added without affecting the execution of the application program.

With the caching module, even if a functional module has a fault, the execution of other functional modules of the application program will not be interrupted, and no data will be lost.

The application program construction method and the application program execution method according to the embodiment of the present disclosure have been described above with reference to FIGS. 1 to 3. The application execution method described above may be implemented using software or a combination of hardware and software.

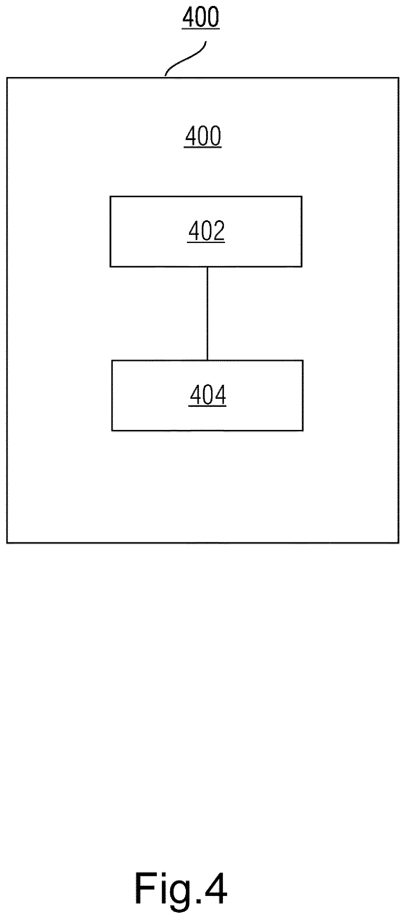

FIG. 4 shows a block diagram of a computing device 400 for executing an application program according to an embodiment of the present disclosure. According to one embodiment, the computing device 400 may include at least one processor 402 that executes at least one computer-readable instructions (i.e., elements implemented in the software form described above) stored or encoded in a computer-readable storage medium (i.e., a memory 404).

It should be understood that the computer-executable instructions stored in the memory 404, when executed, cause at least one processor 402 to perform various operations and functions described above with reference to FIG. 3 in various embodiments of the present disclosure.

According to one embodiment, a non-transitory machine-readable medium is provided. The non-transitory machine-readable medium may have machine-executable instructions (i.e., the elements implemented in the software form described above) that, when executed by a machine, cause the machine to perform various operations and functions described above with reference to FIG. 3 in various embodiments of the present disclosure.

According to one embodiment, a computer program is provided. The computer program includes computer-executable instructions that, when executed, cause at least one processor to perform various operations and functions described above with reference to FIG. 3 in various embodiments of the present disclosure.

According to one embodiment, a computer program product is provided. The computer program product includes computer-executable instructions that, when executed, cause at least one processor to perform various operations and functions described above with reference to FIG. 3 in various embodiments of the present disclosure.

It should be understood that various embodiments in the description are described in a progressive manner, and the same or similar parts between the various embodiments can be referred to each other. The emphasis of each embodiment is to describe the differences from other embodiments. For example, for the above-mentioned embodiments regarding apparatuses, embodiments regarding computing devices, and embodiments regarding machine-readable storage media, since they are basically similar to the method embodiments, they are relatively simply described. For relevant details, please refer to part of the description of the method embodiments.

Specific embodiments of the description have been described above. Other embodiments are within the scope of the appended claims. In some cases, the actions or steps recited in the claims may be performed in a different order from that in the embodiments and still achieve desired results. In addition, the processes depicted in the drawings do not necessarily require the specific order shown or a sequential order, to achieve the desired results. In certain implementations, multitasking and parallel processing are also possible or may be advantageous.

Not all steps and units in the above-mentioned processes and system structure diagrams are necessary, and some steps or units may be ignored according to actual needs. The apparatus structure described in the above embodiments may be a physical structure or a logical structure, that is, some units may be implemented by the same physical entity, or some units may be implemented by a plurality of physical entities, respectively, or may be jointly implemented by some components among a plurality of separate devices together.

The detailed description set forth above with reference to the drawings describes exemplary embodiments and does not represent all embodiments that can be implemented or that fall within the scope of the claims. The term "exemplary" as used throughout the description means "serving as an example, instance, or illustration" and does not mean "preferred" or "advantageous" over other embodiments. The detailed description includes specific details for the purpose of providing an understanding of the described technology. However, these techniques can be implemented without these specific details. In some instances, in order to avoid obscuring the concepts of the described embodiments, well-known structures and apparatuses are shown in the block diagram form.

## Claims

1. An application program construction method (100), comprising:
determining (S102) a plurality of functional modules that constitute an application program, wherein the application program is divided into the plurality of independent functional modules according to independent functions of the application program;
attaching (S104) a pre-configured communication component to each functional module, wherein the pre-configured communication component is a pre-configured communication library supporting function modules using different programming languages; and
establishing (S106) a connection relationship between the functional modules by using the communication components, and storing the connection relationship in a configuration file.

2. The method according to claim 1, wherein the functional modules are threads or processes that implement the independent functions.

3. The method according to claim 1, wherein the communication component comprises at least one of an input communication interface and an output communication interface.

4. The method according to claim 3, wherein the communication component further comprises: at least one of a monitoring module, a caching module, and a load balancing module.

5. The method according to any one of claims 1-4, further comprising: modifying execution logic of the application program by modifying the configuration file.

6. An execution method of an application program, the application program being constructed using the method according to any one of claims 1-5, the execution method for the application program comprising:
initializing the application program, and loading an application program configuration file;
when a first functional module of the application program receives data, triggering execution of the first functional module; and
sending, by the first functional module, data to a pre-configured port in an output communication interface of the first functional module according to an execution result of the first functional module, so as to trigger execution of a second functional module bound to the port, sending, by the second functional module, data to a pre-configured port in an output communication interface of the second functional module according to an execution result of the second functional module, so as to trigger execution of a third functional module bound to the port, and so on, until execution of the application program ends.

7. A computing device (400), comprising:
at least one processor (402); and
a memory (404) coupled to the at least one processor (402), the memory being used for storing instructions that, when executed by the at least one processor (402), cause the processor (402) to perform the method according to claim 6.

8. A non-transitory machine-readable storage medium storing executable instructions that, when executed, cause the machine to perform the method according to claim 6.

9. A computer program product, the computer program product being tangibly stored on a computer-readable medium and comprising computer-executable instructions that, when executed, cause at least one processor to perform the method according to claim 6.

## Patentansprüche

1. Verfahren (100) zum Erstellen von Anwendungsprogrammen, Folgendes umfassend:
Bestimmen (S102) mehrerer Funktionsmodule, die ein Anwendungsprogramm bilden, wobei das Anwendungsprogramm gemäß unabhängigen Funktionen des Anwendungsprogramms in die mehreren unabhängigen Funktionsmodule unterteilt ist;
Anfügen (S104) einer vorkonfigurierten Kommunikationskomponente an jedes Funktionsmodul, wobei die vorkonfigurierte Kommunikationskomponente eine vorkonfigurierte Kommunikationsbibliothek ist, die Funktionsmodule unterstützt, die verschiedene Programmiersprachen verwenden; und
Einrichten (S106) eines Verbindungsverhältnisses zwischen den Funktionsmodulen unter Verwendung der Kommunikationskomponenten und Speichern des Verbindungsverhältnisses in einer Konfigurationsdatei.

2. Verfahren nach Anspruch 1, wobei die Funktionsmodule Threads oder Prozesse sind, welche die unabhängigen Funktionen implementieren.

3. Verfahren nach Anspruch 1, wobei die Kommunikationskomponente mindestens eines von einer Eingabekommunikationsschnittstelle und einer Ausgabekommunikationsschnittstelle umfasst.

4. Verfahren nach Anspruch 3, wobei die Kommunikationskomponente ferner Folgendes umfasst: mindestens eines von einem Überwachungsmodul, einem Cachespeichermodul und einem Lastausgleichsmodul.

5. Verfahren nach einem der Ansprüche 1 bis 4, ferner Folgendes umfassend: Modifizieren der Ausführungslogik des Anwendungsprogramms durch Modifizieren der Konfigurationsdatei.

6. Verfahren zum Ausführen eines Anwendungsprogramms, wobei das Anwendungsprogramm unter Verwendung des Verfahrens nach einem der Ansprüche 1 bis 5 erstellt wird, wobei das Verfahren zum Ausführen eines Anwendungsprogramms Folgendes umfasst:
Initialisieren des Anwendungsprogramms und Laden einer Anwendungsprogramm-Konfigurationsdatei;
wenn ein erstes Funktionsmodul des Anwendungsprogramms Daten empfängt, Auslösen der Ausführung des ersten Funktionsmoduls;
und
Senden von Daten an einen vorkonfigurierten Anschluss in einer Ausgabekommunikationsschnittstelle des ersten Funktionsmoduls durch das erste Funktionsmodul gemäß einem Ausführungsergebnis des ersten Funktionsmoduls, so dass die Ausführung eines zweiten Funktionsmoduls ausgelöst wird, das an den Anschluss gebunden ist, Senden von Daten an einen vorkonfigurierten Anschluss in einer Ausgabekommunikationsschnittstelle des zweiten Funktionsmoduls durch das zweite Funktionsmodul gemäß einem Ausführungsergebnis des zweiten Funktionsmoduls, so dass die Ausführung eines dritten Funktionsmoduls ausgelöst wird, das an den Anschluss gebunden ist, und so weiter, bis die Ausführung des Anwendungsprogramms endet.

7. Rechenvorrichtung (400), die Folgendes umfasst:
mindestens einen Prozessor (402) und
einen Speicher (404), der mit dem mindestens einen Prozessor (402) gekoppelt ist, wobei der Speicher zum Speichern von Anweisungen verwendet wird, die bei Ausführung durch den mindestens einen Prozessor (402) den Prozessor (402) zum Durchführen des Verfahrens nach Anspruch 6 veranlassen.

8. Nicht-transitorisches maschinenlesbares Speichermedium, das ausführbare Anweisungen speichert, die bei Ausführung eine Maschine zum Durchführen des Verfahrens nach Anspruch 6 veranlassen.

9. Computerprogrammprodukt, wobei das Computerprogrammprodukt physisch auf einem computerlesbaren Medium gespeichert ist und computerausführbare Anweisungen umfasst, die bei Ausführung mindestens einen Prozessor zum Durchführen des Verfahrens nach Anspruch 6 veranlassen.

## Revendications

1. Procédé de construction de programme d'application (100), le procédé comprenant les étapes suivantes :
déterminer (S102) une pluralité de modules fonctionnels qui constituent un programme d'application, le programme d'application étant divisé en la pluralité de modules fonctionnels indépendants selon des fonctions indépendantes du programme d'application ;
fixer (S104) un composant de communication préconfiguré à chaque module fonctionnel, le composant de communication préconfiguré étant une bibliothèque de communication préconfigurée supportant des modules fonctionnels utilisant différents langages de programmation ; et
établir (S106) une relation de connexion entre les modules fonctionnels au moyen des composants de communication, et stocker la relation de connexion dans un fichier de configuration.

2. Procédé selon la revendication 1, dans lequel les modules fonctionnels sont des fils d'exécution ou des processus qui mettent en œuvre les fonctions indépendantes.

3. Procédé selon la revendication 1, dans lequel le composant de communication comprend au moins l'une d'une interface de communication d'entrée et d'une interface de communication de sortie.

4. Procédé selon la revendication 3, dans lequel le composant de communication comprend en outre : au moins l'un d'un module de surveillance, d'un module de mise en mémoire cache et d'un module d'équilibrage de charge.

5. Procédé selon l'une quelconque des revendications 1 à 4, comprenant en outre de modifier la logique d'exécution du programme d'application en modifiant le fichier de configuration.

6. Procédé d'exécution d'un programme d'application, le programme d'application étant construit au moyen du procédé selon l'une quelconque des revendications 1 à 5, le procédé d'exécution pour le programme d'application comprenant les étapes suivantes :
initialiser le programme d'application et charger un fichier de configuration de programme d'application ;
lorsqu'un premier module fonctionnel du programme d'application reçoit des données, déclencher l'exécution du premier module fonctionnel ; et
envoyer, par le premier module fonctionnel, des données à un port préconfiguré dans une interface de communication de sortie du premier module fonctionnel selon un résultat d'exécution du premier module fonctionnel, de manière à déclencher l'exécution d'un deuxième module fonctionnel lié au port, envoyer, par le deuxième module fonctionnel, des données à un port préconfiguré dans une interface de communication de sortie du deuxième module fonctionnel selon un résultat d'exécution du deuxième module fonctionnel, de manière à déclencher l'exécution d'un troisième module fonctionnel lié au port, et ainsi de suite, jusqu'à la fin de l'exécution du programme d'application.

7. Dispositif informatique (400), comprenant :
au moins un processeur (402) ; et
une mémoire (404) couplée à l'au moins un processeur (402), la mémoire étant utilisée pour stocker des instructions qui, lorsqu'elles sont exécutées par l'au moins un processeur (402), amène le processeur (402) à exécuter le procédé selon la revendication 6.

8. Support de stockage non transitoire lisible par une machine stockant des instructions exécutables qui, lorsqu'elles sont exécutées, amènent la machine à exécuter le procédé selon la revendication 6.

9. Produit logiciel, le produit logiciel étant stocké de manière tangible sur un support lisible par ordinateur et comprenant des instructions exécutables par ordinateur qui, lorsqu'elles sont exécutées, amènent au moins un processeur à exécuter le procédé selon la revendication 6.
